Europäisches Patentamt

European Patent Office

Office européen des brevets

(11) Veröffentlichungsnummer: **0 315 123 B1**

(12) **EUROPÄISCHE PATENTSCHRIFT**

(45) Veröffentlichungstag der Patentschrift: **12.08.92**

(51) Int. Cl.⁵: **B23B 51/00**

(21) Anmeldenummer: **88118178.8**

(22) Anmeldetag: **01.11.88**

(54) **Bohrwerkzeug.**

(30) Priorität: **06.11.87 DE 3737746**

(43) Veröffentlichungstag der Anmeldung:
**10.05.89 Patentblatt 89/19**

(45) Bekanntmachung des Hinweises auf die
Patenterteilung:
**12.08.92 Patentblatt 92/33**

(84) Benannte Vertragsstaaten:
**AT BE CH DE ES FR GB GR IT LI LU NL SE**

(56) Entgegenhaltungen:
**EP-A- 0 242 638**
**DE-A- 3 737 746**
**DE-U- 8 610 234**

(73) Patentinhaber: **Eischeid, Karl**
**Schulweg 23**
**W-5250 Engelskirchen(DE)**

(72) Erfinder: **Eischeid, Karl**
**Schulweg 23**
**W-5250 Engelskirchen(DE)**

(74) Vertreter: **Sturies, Herbert et al**
**Patentanwälte Dr. Ing. Dipl. Phys. Herbert**
**Sturies Dipl. Ing. Peter Eichler Brahmsstras-**
**se 29, Postfach 20 12 42**
**W-5600 Wuppertal 2(DE)**

## Beschreibung

Die Erfindung bezieht sich auf ein Bohrwerkzeug zur Herstellung von Hinterschneidungen in nicht durchgehenden zylindrischen Vorbohrungen, mit einem im Durchmesser dem Durchmesser der Vorbohrung etwa entsprechenden Bohrschaft, der an seiner Spitze mit einem Druckstück verbunden und über eine Schrägfläche an ersterem abstützbar ist sowie eine radial über seinen Außenumfang vorstehende, bei seiner Axialbeaufschlagung die Hinterschneidung erzeugende Seitenschneide aufweist, der gegenüber der Bohrschaft in einem dessen Einführen in die Vorbohrung gestattendem Maße abgeflacht ist, wobei das Druckstück direkt an der Schrägfläche der Bohrschaftspitze mittels einer schrägflächenparallelen hinterschnittenen Führungsnut radialbeweglich befestigt ist, in die ein hinterschnittleistenförmiger Kupplungsvorsprung axial formschlüssig eingreift, und wobei das Druckstück eine quer zur Radialbewegungsrichtung der Seitenschneide zylindrisch gewölbte Gleitfläche aufweist, auf der die ebenfalls zylindrisch gewölbte Schrägfläche der Bohrschaftspitze abstützbar ist.

Ein derartiges Bohrwerkzeug ist aus der EP-A1-0 242 638 bekannt. Bei einem solchen Bohrwerkzeug ist es besonders vorteilhaft, daß das Druckstück direkt an der Schrägfläche der Bohrschaftspitze radialbeweglich befestigt ist. Ein solches Druckstück kann aus der Bohrung herausgezogen werden und ist vielfach zu verwenden. Die radialbewegliche Befestigung gewährleistet, daß in einfacher Weise, wie bei einem losen Druckstück, der gewünsche Radialvortrieb einer oder mehrerer Seitenschneiden erzeugt wird. Bei dem bekannten Bohrwerkzeug ist die Führungsnut an der Spitze des Bohrschafts und der Kupplungsvorsprung am Druckstück angeordnet. Bei dieser Ausgestaltung kann zwar eine universellere Verwendbarkeit des Bohrschafts dadurch erreicht werden, daß in seine Führungsnut unterschiedlich gestaltete Kupplungsvorsprünge oder unterschiedlich gestaltete Druckstücke eingesetzt werden, jedoch sind die Belastung des Kupplungsvorsprungs und der Schaftspitze im rauhen Betrieb unter Umständen so groß, daß die Haltbarkeit der axial formschlüssigen Verbindung beeinträchtigt wird. Es kommt beispielsweise in gewissen Anwendungsfällen zum Aufweiten der Schaftspitze.

Demgegenüber liegt der Erfindung die Aufgabe zugrunde, ein Bohrwerkzeug der eingangs genannten Art so zu verbessern, daß die Verbindungsfestigkeit zwischen der Bohrschaftspitze und dem Druckstück auch im rauhen Betrieb ausreicht, die Verbindung also hinreichend standfest ist.

Diese Aufgabe wird bei einem Bohrwerkzeug der eingangs genannten Art dadurch gelöst, daß der Kupplungsvorsprung an der Bohrschaftspitze angebracht ist und die Führungsnut sich in dem Druckstück befindet, und daß die Gleitfläche des Druckstücks einen halbkreisartigen Querschnitt hat, wobei die untersten Kanten der Bohrschaftspitze etwa bündig mit dem Kupplungsvorsprung liegen.

Für die Erfindung ist wesentlich, daß sich der Kupplungsvorsprung an der Bohrschaftspitze befindet, so daß eine Vertiefung zur Aufnahme eines Kupplungsvorsprungs im Inneren des Bohrschafts entfällt. Durch das Geringerhalten der Eingriffstiefe des Druckstücks in die Bohrschaftspitze wird die Stabilität der Bohrschaftspitze entsprechend verstärkt. Zugleich ist die Gleitfläche infolge ihrer halbkreisartigen Wölbung größer bzw. die auf diese Wölbung entfallende Eingriffstiefe ist größer, so daß eine verbesserte Drehmitnahme des Druckstücks erfolgt.

Der Kupplungseingriff zwischen der hinterschnittenen Führungsnut der Bohrschaftspitze und dem Kupplungsvorsprung weist axial und/oder quer zur Führungsnut begrenztes Bewegungsspiel auf. Das begrenzte Bewegungsspiel ist vorhanden, damit anfallender Bohrstaub die Radialbeweglichkeit zwischen Druckstück und Bohrschaftspitze nicht beeinträchtigen kann.

Um das Druckstück mit dem Bohrschaft auf einfacher Weise unlösbar verbinden zu können, hat ein Druckstück eine solche Führungsnut, die am einen Nutende mindestens einen angeformten Quervorsprung und am anderen Nutende mindestens einen Verformungsbereich aufweist.

Bei der Anwendung des Bohrwerkzeugs in verzogenen bzw. krummen Bohrungen ist es zweckmäßig, daß der Bohrschaft im Bereich zwischen der Seitenschneide und seinem oberen, anschlußseitigen Ende einen Reibung an der Vorbohrungswand zumindest verringernden Außenradius aufweist. Verzogene bzw. krumme Vorbohrungen weichen in geringem Maße von der an sich erwünschten Zylinderform ab und bieten dem maschinellen Antrieb des Bohrwerkzeugs einen erhöhten Widerstand mit entsprechender Überbelastung des Bohrwerkzeugs selbst und der es antreibenden Teile. Die Verringerung des Außenradius vermeidet eine solche Überbelastung in den überwiegenden Fällen, in denen sich der Verzug der Vorbohrung in Grenzen hält und es ist gewährleistet, daß der Hinterschnitt voll ausgeprägt ist. Die Durchmesserschwächung ist ohne Beeinträchtigung der Stabilität des Bohrwerkzeugs möglich, so daß auch die über den Kupplungsvorsprung des Bohrschafts und die Führungsnut des Druckstücks erfolgende mechanische Verbindung zwischen beiden Teilen entsprechend stabil ist.

Zweckmäßig ist oberhalb der Seitenschneide ein bei fertiggestellter Hinterschneidung an der Vorbohrungswand anliegender Schaftabschnitt vorhanden, der dazu beitragen kann, die exakte Axialendlage des Bohrschafts zu sichern, so daß eine Überbeanspruchung der aus dem Kupplungsvorsprung und der Führungsnut bestehenden mechanische Verbindung zwischen dem Bohrschaft und dem Druckstück im Sinne einer vergrößerten Standfestigkeit erreicht wird.

Hat der Bohrschaft eine bis zum anschlußseitigen Ende längsdurchlaufende Bohrung, so ist es vorteilhaft, wenn die Bohrung radial in Drehrichtung vor der Seitenschneide und bedarfsweise auch diagonal gegenüber mündet. Eine derartige Anordnung der Bohrung sorgt dafür, daß der anfallende Bohrstaub direkt an der Stelle seines Entstehens abgesaugt werden kann und vermeidet außerdem den bei einer lediglich axialen Staubabsaugbohrung gegebenen Nachteil, daß der Staub zwischen der gewölbten Gleitfläche des Druckstücks und der entsprechend gewölbten Schrägfläche der Bohrschaftspitze abgesaugt werden müßte, was die Gefahr der Beeinträchtigung der Saugwirkung und der Gleitwirkung hätte. Zusätzlich wird Verschleiß an den Kupplungselementen durch Malwirkung des Staubs vermieden.

Die Erfindung wird anhand von in der Zeichnung dargestellten Ausführungsbeispielen näher erläutert. Es zeigt:

Fig. 1      eine Seitenansicht eines Bohrers,

Fig. 1a     das dem Bohrer der Fig. 1 zugeordnete und in entsprechender Ansicht dargestellte, teilweise geschnitte Druckstück,

Fig. 1b     den Schnitt B-B der Fig. 1,

Fig. 2      eine um 90° gedrehte Darstellung des Bohrwerkzeugs der Fig. 1,

Fig. 2a     eine entsprechend um 90° gedrehte Seitenansicht des Druckstücks der Fig. 1a,

Fig. 2b     eine um 90° nach unten gekippte Aufsicht auf das Druckstück der Fig. 2a, und

Fig. 2c     die Schnittdarstellung C-C der Fig. 2.

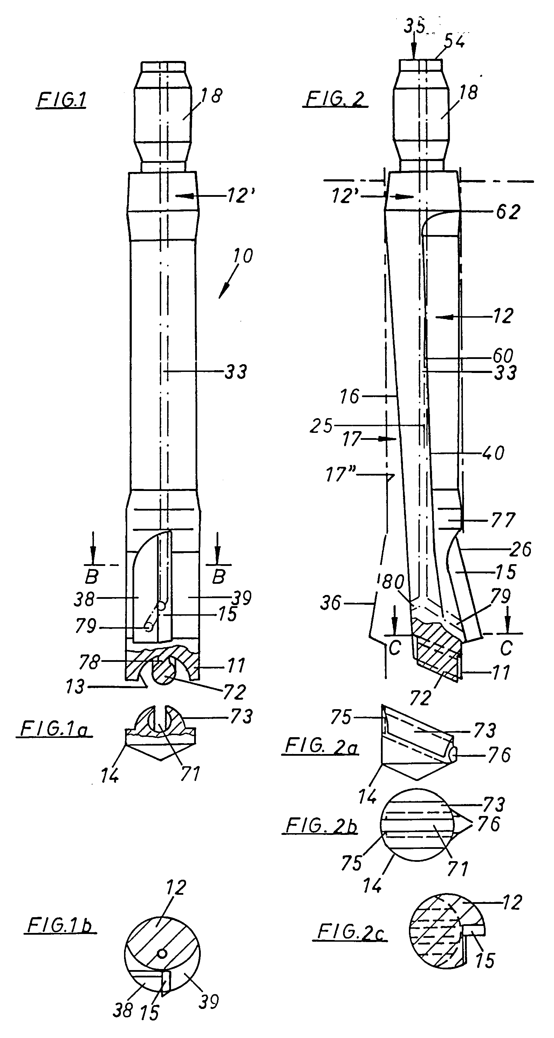

Das in den Fig. 1, 2 dargestellte Bohrwerkzeug 10 besteht im wesentlichen aus einem Bohrschaft 12 und einem Druckstück 14. Der Bohrschaft 12 hat eine Spitze 11 und einen Antriebsanschluß 18, der beispielsweise als Gewinde ausgebildet werden kann. Das äußerste antriebsseitige Ende des Bohrschafts 12 ist als Axialbeaufschlagungsfläche 54 ausgebildet, mit der sich der Bohrschaft 12 bei in Richtung des Pfeiles 35 erfolgender Axialbeaufschlagung z. B. durch eine Hammerbohrmaschine an dieser bzw. deren Aufnahme abstützt.

In Fig. 2 ist die zylindrische Vorbohrung 17 strichpunktiert eingezeichnet. Es ist ersichtlich, daß der Bohrschaft 12 an seinem oberen Ende einen etwa dem Durchmesser der Vorbohrung 17 entsprechenden Durchmesser 62 aufweist. Im übrigen ist die nähere Ausbildung des Bohrschaftes 12 aus den Fig. 3 a bis 3 d der EP-A1-0 242 638 ersichtlich.

An der dem Druckstück 14 zugewendeten Spitze 11 hat der Bohrschaft 12 eine Seitenschneide 15, die radial über seinen Außenumfang vorsteht und so angeordnet ist, daß sich bei der in Fig. 2 dargestellten gleichachsigen Lage zwischen der Vorbohrung 17 und dem Bohrschaft 12 die strichpunktiert dargestellte Hinterschneidung 36 erzeugen läßt. Die Seitenschneide 15 ist mit einer zu der Bohrschaftspitze 11 geneigten Schneidkante 26 versehen. Da die Drehung des Bohrwerkzeugs 10 im Uhrzeigersinn erfolgt, ist die Bohrschaftspitze 11 im Bereich 38 vor der Seitenschneide 15 ausgenommen und im Bereich 39 zu ihrem Antrieb durch Werkstoff des Bohrschafts 12 abgestützt. Der Bohrschaft 12 ist mit einem abgeflachten Umfang 16 versehen, der sich von der Bohrschaftspitze 11 bis zum Antriebsanschluß 18 erstreckt. Aus Fig. 2 ist ersichtlich, daß diese Abflachung gleichmäßig bzw. mit demselben Winkel zur Bohrschaftachse 25 erfolgt. Der Winkel ist in Fig. 2 durch das Bezugszeichen 60 veranschaulicht. Durch die Abflachung ergeben sich Seitenkanten 40.

An der Bohrschaftspitze 11 ist eine Schrägfläche 13 vorhanden, mit der sich der Bohrschaft 12 auf dem Druckstück 14 abstützen kann, wenn er in der Richtung des Pfeils 35 in die Vorbohrung 17 hineingeschoben und damit das Druckstück 14 gegen die nicht dargestellte Sohle der Vorbohrung 17 gepreßt wird. Die Schrägfläche 13 ist etwa unter 40° bis 70°, vorzugsweise 65° zur Bohrschaftachse 25 in Axialbeaufschlagungsrichtung des Pfeils 35 geneigt, also dem Druckstück 14 zugeneigt. Dabei ist die Schrägfläche 13 etwa parallel dem diagonal gegenüberliegenden Flächenabschnitt der Sohle. Eine Axialbeaufschlagung des Bohrschaftes 12 ergibt über die Schrägfläche 13 einen radialen Vortrieb der Seitenschneide 15 zur Herstellung der Hinterschneidung 36.

Um die Flächenpressung zwischen der Schrägfläche 13 und dem Druckstück 14 gering zu halten, ist die Schrägfläche 13 der benachbarten Druckstückfläche räumlich angepaßt, was sich aus Fig. 1 ergibt.

Die Seitenschneide 15 ist bezüglich der Schrägfläche 13 überlappungsfrei angeordnet, das heißt, sie ist horizontal gesehen höher angeordnet, als der oberste Bereich der Schrägfläche 13, was sich insbesondere aus Fig. 2 ergibt. Diese Ausbildung des Bohrwerkzeugs 10 dient insbesondere der Stabilität im Bereich der Bohrschaftspitze 11, welche durch den schlagenden Vorschub des Bohrwerkzeugs 10 stark beansprucht wird. Auch die Befestigung der Seitenschneide 15, beispielsweise eines in den Bohrschaft 12 eingelöteten Hartmetallplättchens, wird durch die vorbeschriebene Ausbildung des Bohrwerkzeugs 10 weniger beansprucht.

An der Bohrschaftspitze 11 bzw. an dessen Schrägfläche 13 ist ein Druckstück 14 so befestigt, daß in axialer Richtung ein dauerhafter Zusammenhalt gegeben ist. Infolgedessen kann der Bohrschaft 12 axial in die Vorbohrung 17 hineingesteckt und aus dieser herausgezogen werden ohne daß vorher und/oder nachher etwaige Manipulationen bezüglich der Einbringung des Druckstücks bzw. dessen Verbleib in die bzw. in der Vorbohrung 17 durchgeführt werden müßten. Das Druckstück 14 ist infolge seiner dauerhaften Befestigung an der Bohrschaftspitze 11 zur ständigen Verwendung in Verbindung mit dem Bohrschaft 12 bestimmt und muß daher besonders widerstandsfähig sein. Es ist infolgedessen vorzugsweise als vergütetes Schmiedeteil ausgebildet. Auch ein Feingußteil mit entsprechenden Eigenschaften ist verwendbar.

Der Zusammenbau des Druckstücks 14 mit der Schrägfläche 13 ist dergestalt, daß sich beide in radialer Richtung relativ zueinander bewegen können. Hierzu hat das Druckstück 14 eine hinterschnittene Führungsnut 71, die gemäß den Figuren schrägflächenparallel ist, also dieselbe Neigung gegen die Bohrschaftachse aufweist, wie die Schrägfläche 13. In diese Führungsnut 71 greift ein Kupplungsvorsprung 72 der Bohrschaftspitze 11 ein, und zwar vorzugsweise axial formschlüssig. Dieser Kupplungsvorsprung 72 ist leistenartig ausgebildet und dabei zugleich hinterschnitten, so daß die beiden Kupplungsteile 71, 72 zum Zusammenbau in der Darstellungsebene der Fig. 2 zusammengeschoben werden müssen.

Desweiteren ist aus Fig. 2a ersichtlich, daß das Kupplungsstück 14 eine Gleitfläche 73 aufweist. Diese Gleitfläche 73 verläuft in der Radialbewegungsrichtung, in der die Relativverschiebungen zwischen dem Druckstück 14 und der Bohrschaftspitze 11 stattfinden. Quer dazu ist die Gleitfläche 73 gewölbt und die Figuren zeigen, daß die Schrägfläche 13 entsprechend gewölbt ist.

Die Figuren zeigen nicht, daß der Kupplungsvorsprung 72 axial, aber auch radial ein begrenztes Bewegungsspiel in der Führungsnut 71 aufweist, demgemäß sich das Druckstück 14 und die Bohrschaftspitze 11 relativ zueinander bewegen können. Durch dieses Bewegungsspiel wird gewährleistet, daß beim Bohrvorgang entstehender Bohrstaub auf der Gleitfläche 73 nicht zu einer Überbeanspruchung der Kupplungsteile 71, 72 bzw, zu deren Verklemmen führt. Die Kupplungsteile 71, 72 werden darüberhinaus dadurch entlastet, daß die beim Drehantrieb des Bohrschafts 12 auftretenden Drehmitnahmekräfte direkt von der Bohrspitze 11 über deren Schrägfläche 13 auf die gewölbte Gleitfläche 73 des Druckstücks 14 übertragen werden.

Aufgrund der Radialbewegung der Bohrschaftspitze 11 und der damit verbundenen Axialbelastung des Druckstücks 14 ist nicht auszuschließen, daß dieses eine kreiselartige Drehbewegung ausführt. Um diese Bewegung zu erleichtern, ist der maximale Außendurchmesser des Druckstücks 14 etwas kleiner, als der Durchmesser der Vorbohrung 17.

Die Führungsnut 71 ist in das Druckstück 14 eingearbeitet, während der Kupplungsvorsprung 72 mit einem Steg 78 an der Bohrschaftspitze 11 derart befestigt ist, daß dessen Schrägfläche 13 in zwei gleichgroße Abschnitte unterteilt ist, die jeweils nahezu viertelkreisförmigen Querschnitt haben. Dementsprechend liegt der Kupplungsvorsprung 72 praktisch bündig mit den untersten bzw. äußersten Kanten der Bohrschaftspitze 11. Dementsprechend ist die Gleitfläche 73 des Kupplungsstücks 14 praktisch halbkreisartig im Querschnitt und mit einander parallelen Mantellinien versehen. Insbesondere aus dem Vergleich der Fig. 26 der EP-A1-0 242 638 und der Fig. 2a ist ersichtlich, daß die Gleitfläche 73 beim hier vorliegenden Druckstück 14 erheblich vergrößert ist, was durch die größere, zur Umfassung des Kupplungsvorsprungs 72 erforderliche axiale Erstreckung bedingt ist. Dadurch ergibt sich eine günstige Verteilung der Drehmitnahmekräfte auf das Druckstück 14 ohne Belastung des Kupplungsvorsprungs 72 und mit erheblich verminderter Belastung der Bohrschaftspitze 11. Es ist ersichtlich, daß der Kupplungsvorsprung 72 geringfügig über die untersten Enden der Bohrschaftspitze 11 vorstehen, so daß die Führungsnut 71 entsprechend tief in das Druckstück 14 eingearbeitet ist.

Zum Zusammenbauen des Druckstücks 14 mit dem Bohrschaft 12 wird der Kupplungsvorsprung 72 in die Führungsnut 71 gesteckt, bis er an deren Quervorsprüngen 75 anliegt. Sodann werden die Kanten 76 verformt, wodurch der gewünschte dauerhafte Zusammenbau erreicht wird.

Die Fig. 1, 2 zeigen einen Rohling des Bohrerschafts, der als Feingußteil ausgebildet ist, ebenso wie das Druckstück 14, um deren für ihren axialen Zusammenhalt erforderliche Formgebung herstellungstechnisch einfach zu ermöglichen. Das zeigt sich daran, daß das anschlußseitige Ende bzw. der Antriebsanschluß 18 noch nicht mit dem an sich vorgesehenen Gewindeanschluß versehen ist. Gleichwohl ist aber aus darstellerischen Gründen bereits eine Seitenschneide 15 dargestellt, die der Herstellung einer Hinterschneidung 36 in der Innenwand 17″ der Vorbohrung 17 dient, was in Fig. 13 strichpunktiert dargestellt ist.

Aus beiden Darstellungen ist ersichtlich, daß der Bohrschaft 12 in seinem der vorbeschriebenen Abflachung 16 gegenüberliegenden Umfangsbereich, der etwa halbkreisförmigen Querschnitt hat, einen verringerten Außenradius aufweist. Das ergibt sich aus dem aus den Fig. 1, 2 ersichtlichen Rücksprung dieses peripheren Bohrschaftbereichs zwischen dem Durchmesser 62 am oberen, anschlußseitigen Ende 12' des Bohrschafts 12 und dessen Vorsprung 77 in der Nähe der Seitenschneide 15, weil diese beiden, also der Durchmesser 62 und der Vorsprung 77, etwa Vorbohrungsradius aufweisen. Der durch diese Ausgestaltung des Bohrschafts 12 ermöglichte Freiraum zur Innenwand 17″ der Vorbohrung 17 gestattet die problemlose Anwendung des Bohrwerkzeugs 10 auch dann, wenn die Vorbohrung 17 krumm ist, also ihre Innenwand 17″ Vorsprünge aufweist, welche die erforderliche Drehbewegung des Bohrschafts 12 behindern würden.

Der Vorsprung 77 ist so bemessen, daß er an der Innenwand 17″ zur Anlage kommt, wenn die Hinterschneidung 36 durch die Seitenschneide 15 fertiggestellt ist. Der Vorsprung 77 dient der Einhaltung der exakten zentrischen Lage des Bohrschafts 12 nach Fertigstellung der Hinterschneidung 36, wenn der Bohrschaft den vorbeschriebenen verringerten Außenradius bzw. einen Freiraum zur Innenwand 17″ der Vorbohrung 17 aufweist.

Der Bohrschaft 12 weist noch eine Bohrung 33 auf, durch die der anfallende Bohrstaub abgesaugt werden kann.

Im Bereich der Bohrspitze 11 hat die Bohrung 33 zwei Mündungskanäle 79, 80 die jeweils vom Druckstück 14 zum anschlußseitigen Ende 12' des Bohrschafts 12 hin geneigt verlaufen, um das Absaugen von Bohrstaub zu erleichtern. Der Mündungskanal 79 mündet radial in Drehrichtung vor der Seitenschneide 15, vergl. Fig. 1. Der Mündungskanal 80 ist lediglich bedarfsweise vorhanden und diagonal gegenüber der Seitenschneide 15 so angeordnet, daß er aus einem höheren Bereich der Seitenschneide 15 stammenden Staub absaugt.

Das Bohrwerkzeug 10 wird betrieben, indem zunächst das Druckstück 14 in die zylindrische Vorbohrung 17 hineingesteckt und von dem Bohrschaft 12 gegen die Sohle der Vorbohrung 17 gedrückt wird. Der in die Vorbohrung 17 eingeschobene Bohrschaft liegt während des Einschiebens mit seinem abgeflachten Außenumfang 16 an der Innenwand 17″ der Vorbohrung 17 an, weil die wegen der Tiefe der Hinterschneidung 36 radial vorspringende Seitenschneide 15 über den Außenumfang des Bohrschafts 12 vorspringt. Wenn die Schrägfläche 13 des Bohrschafts 12 auf dem Druckstück 14 aufsitzt, kann das Bohrwerkzeug 10 axial beaufschlagt werden, wodurch eine radiale Kraftkomponente erzeugt wird, und zwar in Richtung des Vorsprungs der Seitenschneide 15. Infolgedessen gräbt sich die Seitenschneide 15 mit ihrer Schneidkante 26 in den die Innenwand 17″ bildenden Werkstoff ein und erzeugt bei Drehung des Bohrschafts 12 die aus Fig. 2 ersichtlichen ringnutartige Hinterschneidung 36. Während des radialen Eindringens der Seitenschneide 15 verla

gert sich der Bohrschaft 12 axial einwärts in die Vorbohrung 17, wobei seine Schrägfläche 13 auf dem Druckstück 14 abgleitet. Während des axialen und radialen Eindringens vollführt der Bohrschaft 12 bei maschinellem Antrieb kreisende Taumelbewegungen. Dabei ist er im Anfangsbereich der Vorbohrung 17 mit dem Ende 12' abgestützt. In diesem Bereich kann der Bohrschaft 12 ballig verjüngt sein.

**Patentansprüche**

1. Bohrwerkzeug (10) zur Herstellung von Hinterschneidungen (36) in nicht durchgehenden zylindrischen Vorbohrungen (17), mit einem im Durchmesser dem Durchmesser der Vorbohrung (17) etwa entsprechenden Bohrschaft (12), der an seiner Spitze (11) mit einem Druckstück (14) verbunden und über eine Schrägfläche (13) an ersterem abstützbar ist sowie eine radial über seinen Außenumfang vorstehende, bei seiner Axialbeaufschlagung die Hinterschneidung (36) erzeugende Seitenschneide (15) aufweist, der gegenüber der Bohrschaft (12) in einem dessen Einführen in die Vorbohrung (17) gestattendem Maße abgeflacht ist, wobei das Druckstück (14) direkt an der Schrägfläche (13) der Bohrschaftspitze (11) mittels einer schrägflächenparallelen hinterschnittenen Führungsnut (71) radialbeweglich befestigt ist, in die ein hinterschnittleistenförmiger Kupplungsvorsprung (72) axial formschlüssig eingreift, und wobei das Druckstück (14) eine quer zur Radialbewegungsrichtung der Seitenschneide (15) zylindrisch gewölbte Gleitfläche (73) aufweist, auf der die ebenfalls zylindrisch gewölbte Schrägfläche (13) der Bohrschaftspitze (11) abstützbar ist, **dadurch gekennzeichnet,** daß der Kupplungsvorsprung (72) an der Bohrschaftspitze (11) angebracht ist und die Führungsnut (71) sich in dem Druckstück (14) befindet, und daß die Gleitfläche (73) des Druckstücks (14) einen halbkreisartigen Querschnitt hat, wobei die untersten Kanten der Bohrschaftspitze (11) etwa bündig mit dem Kupplungsvorsprung (72) liegen.

2. Bohrwerkzeug nach Anspruch 1, **dadurch gekennzeichnet,** daß der Kupplungseingriff zwischen der hinterschnittenen Führungsnut (71) der Bohrschaftspitze (11) und dem Kupplungsvorsprung (72) axial und/oder quer zur Führungsnut (71) begrenztes Bewegungsspiel aufweist.

3. Bohrwerkzeug nach Anspruch 1 oder 2, **dadurch gekennzeichnet,** daß ein Druckstück (14) eine solche Führungsnut (71) hat, die an einem Nutenende mindestens einen angeformten Quervorsprung (75) und am anderen Nutenende mindestens einen Verformungsbereich (76) aufweist.

4. Bohrwerkzeug nach einem oder mehreren der Ansprüche 1 bis 3, **dadurch gekennzeichnet,** daß der Bohrschaft (12) im Bereich zwischen der Seitenschneide (15) und seinem oberen, anschlußseitigen Ende (12') einen Reibung an der Vorbohrungswand (17'') mindestens verringernden Außenradius aufweist.

5. Bohrwerkzeug nach einem oder mehreren der Ansprüche 1 bis 4, **dadurch gekennzeichnet,** daß oberhalb der Seitenschneide (15) ein bei fertiggestellter Hinterschneidung (36) an der Vorbohrungswand (17'') anliegender Schaftabschnitt (77) vorhanden ist.

6. Bohrwerkzeug nach einem oder mehreren der Ansprüche 1 bis 5, mit einer bis zum anschlußseitigen Ende des Bohrschafts längsdurchlaufenden Bohrung, **dadurch gekennzeichnet,** daß die Bohrung (33) schrägflächenseitig radial in Drehrichtung vor der Seitenschneide (15) und bedarfsweise auch diagonal gegenüber mündet.

7. Bohrwerkzeug nach einem oder mehreren der Ansprüche 1 bis 6, **dadurch gekennzeichnet,** daß die Schrägfläche (13) der Bohrspitze (11) bezüglich der Seitenschneide (15) überlappungsfrei angeordnet ist.

**Claims**

1. Drill tool (10) for producing undercuts (36) in pilot holes (17) which are not continuously cylindrical, with a drill shaft (12) having a diameter corresponding approximately to the diameter of the pilot hole (17) and which is connected at its tip (11) to a thrust piece (14) and which can be supported on the thrust piece by means of a chamfered surface (13) and which has a side cutter (15) which projects radially beyond the external circumference of the shaft and which produces the undercut (36) upon axial impacts on the shaft, the drill shaft at the cutter, compared to the rest of the drill shaft, being flattened by an amount to permit insertion into the pilot hole, wherein the thrust piece (14) is attached, in such a way that it can move radially, directly to the chamfered surface (13) of the drill shaft tip (11) by means of a guide groove (71) undercut parallel to the chamfered surface, into which groove a coupling projection (72), in the shape of an undercut rib, interlocks with a positive fit axially, and wherein the thrust piece (14) has a cylindrically arched sliding surface (73) transverse to the direction of radial movement of the side cutter (15), on which sliding surface the similarly cylindrically arched chamfered surface (13) of the drill shaft tip (11) is arranged to be supported, characterised in that the coupling projection (72) is fitted to the drill shaft tip (11) and the guide groove (71) is in the thrust piece (14), and that the sliding surface (73) of the thrust piece (14) has a semi-circular cross section, with the lowest edges of the drill shaft tip (11) approximately flush with the coupling projection (72).

2. Drill tool as claimed in claim 1 characterised in that the coupling contact between the undercut guide groove (71) of the drill shaft tip (11) and the coupling projection (72) has a limited amount of play in movement axially and/or transversely to the guide groove (71).

3. Drill tool as claimed in claim 1 or 2 characterised in that a thrust piece (14) has a guide groove (71) which has at one end of the groove at least one added transverse projection (75) and at the other end of the groove at least one region (76) which has been shaped.

4. Drill tool as claimed in one or more of claims 1 to 3, characterised in that the drill shaft (12) in the region between the side cutter (15) and its upper end (12') on the connection side, rubs against the wall (17'') of the pilot hole at least at the smallest external radius.

5. Drill tool as claimed in one or more of claims 1 to 4, characterised in that above the side cutter (15) there is a section (77) of the shaft which lies against the wall of the pilot hole (17'') when the undercut (36) is finished.

6. Drill tool as claimed in one or more of claims 1 to 5, with a bore hole running longitudinally along the bore shaft up to the end next to the connection, characterised in that the bore hole (33) issues radially near the chamfered surface in advance of the side cutter (15) in the direction of rotation and if necessary also diagonally opposite.

7. Drill tool as claimed in one or more of claims 1 to 6, characterised in that the chamfered surface (13) of the drill tip (11) is arranged without any overlapping with regard to the side cutter (15).

## Revendications

1. Outil de perçage (10) pour la réalisation de contre-dépouilles (36) dans des avant-trous cylindriques non traversants (17), comportant une tige de perçage (12) dont le diamètre correspond approximativement à celui de l'avant-trou (17), qui est reliée, au niveau de sa pointe (11), à un élément de pression (14), et apte à s'appuyer contre celui-ci par l'intermédiaire d'une surface inclinée (13), et qui possède une lame latérale (15) faisant saillie radialement sur sa circonférence extérieure et produisant, lorsqu'elle est sollicitée axialement, la contre-dépouille (36), ladite circonférence extérieure étant aplatie par rapport à la tige de perçage (12) suivant des proportions permettant l'introduction de cette dernière dans l'avant-trou (17), étant précisé que l'élément de pression (14) est fixé, mobile radialement, directement à la surface inclinée (13) de la pointe (11) de la tige de perçage à l'aide d'une rainure de guidage dépouillée (71) parallèle à ladite surface inclinée et dans laquelle vient en prise axialement par complémentarité de forme une partie saillante d'accouplement (72) en forme de nervure dépouillée, et étant précisé que l'élément de pression (14) possède une surface de glissement (73) bombée suivant une forme cylindrique, transversalement par rapport au sens de mouvement radial de la lame latérale (15), et sur laquelle la surface inclinée (13), également bombée suivant une forme cylindrique, de la pointe (11) de la tige de perçage est apte à s'appuyer, caractérisé en ce que la partie saillante d'accouplement (72) est montée au niveau de la pointe (11) de la tige de perçage et la rainure de guidage (71) se trouve dans l'élément de pression (14), et en ce que la surface de glissement (73) de l'élément de pression (14) possède une section transversale en forme de demicercle, les arêtes inférieures de la pointe (11) de la tige de perçage formant sensiblement une surface plane avec la partie saillante d'accouplement (72).

2. Outil de perçage selon la revendication 1, caractérisé en ce que le contact d'accouplement entre la rainure de guidage dépouillée (71) de la pointe (11) de la tige de perçage et la partie saillante d'accouplement (72) présente axialement et/ou transversalement par rapport à la rainure de guidage (71) un jeu limité.

3. Outil de perçage selon la revendication 1 ou 2, caractérisé en ce qu'un élément de pression (14) comporte une rainure de guidage (71) qui possède, à une extrémité, une ou plusieurs parties saillantes transversales rapportées (75) et, à l'autre extrémité, une ou plusieurs zones de déformation (76).

4. Outil de perçage selon l'une au moins des revendications 1 à 3, caractérisé en ce que la tige de perçage (12) présente, dans la zone comprise entre la lame latérale (15) et son extrémité supérieure (12') située côté raccord, un rayon extérieur réduisant au moins le frottement au niveau de la paroi (17") de l'avant-trou.

5. Outil de perçage selon l'une au moins des revendications 1 à 4, caractérisé en ce qu'il est prévu, au-dessus de la lame latérale (15), une section de tige (77) voisine de la paroi (17") de l'avant-trou lorsque la contre-dépouille (36) est terminée.

6. Outil de perçage selon l'une au moins des revendications 1 à 5, comportant un perçage traversant longitudinal allant jusqu'à l'extrémité de la tige de perçage située côté raccord, caractérisé en ce que le perçage (33) débouche avant la lame latérale (15), radialement dans le sens de rotation, côté surface inclinée, et éventuellement en diagonale, aussi, en face de ladite lame (15).

7. Outil de perçage selon l'une au moins des revendications 1 à 6, caractérisé en ce que la surface inclinée (13) de la pointe de perçage (11) est disposée sans chevauchement par rapport à la lame latérale (15).

FIG.1

FIG. 2

FIG.1a

FIG. 2a

FIG.2b

FIG.1b

FIG.2c